# EUROPÄISCHE PATENTSCHRIFT

(11) **EP 0 417 616 B1**
(45) Veröffentlichungstag und Bekanntmachung des Hinweises auf die Patenterteilung: **17.11.1994**
(21) Anmeldenummer: 90117030.8
(22) Anmeldetag: 05.09.1990
(51) Int. Cl.: G07C 5/00, G06K 7/015, G06K 13/00

(54) **Einrichtung zur Aufnahme eines transportablen, karten- oder plattenförmigen Datenspeichers**
Device for receiving a transportable data memory in the form of a card or a plate
Dispositif de réception d'une mémoire transportable de données présentée sous la forme d'une carte ou de forme plate

(30) Priorität: 13.09.1989 DE 3930545
(43) Veröffentlichungstag der Anmeldung: 20.03.1991
(73) Patentinhaber: Mannesmann Kienzle GmbH (HR B1220), 78052 Villingen-Schwenningen (DE)
(72) Erfinder: Koch, Siegfried, Dipl.-Ing. (FH), D-7730 Villingen-Schwenningen (DE)

(56) Entgegenhaltungen:
- EP-A- 0 313 882
- DE-A- 3 303 501
- GB-A- 2 033 763
- US-A- 4 598 962

## Beschreibung

Die Erfindung betrifft eine Einrichtung zur Aufnahme eines transportablen, karten- oder plattenförmigen Datenspeichers an der Frontwand eines Gerätes, mit welcher der Datenspeicher in seine Betriebsstellung bringbar ist, in welcher er unzugänglich ist.

Transportable Datenspeicher, beispielsweise in Form von Chipkarten oder in ähnlicher Weise gut handhabbare plattenförmige Datenspeicher mit EEPROMs oder gepufferten RAMs gewinnen aufgrund des hohen Speichervermögens und zufriedenstellender Datensicherheit zunehmend an Bedeutung, und zwar für eine Vielzahl von Anwendungen.

Mit der zunehmenden Bedeutung der transportablen Datenspeicher und der Zunahme von Funktionen und Wertinhalten dieser Informationsträger nehmen aber auch die Anforderungen an die Mittel zu, die diesen Datenspeichern in ihrer Schreib- und Leseposition innerhalb eines Gerätes als Aufnahme dienen, d. h. es sind einerseits beim Stecken eines derartigen Datenspeichers eine Vielzahl eng beieinander liegender Kontakte beschädigungs- und überbrückungsfrei zu kontaktieren, was eine genaue Führung und Lagefixierung des Datenspeichers erforderlich macht, andererseits sind Verriegelungs- und Zugriffssicherungsmittel erforderlich.

Es sind daher schon spezielle Transportschlitten für die Eingabe und Freigabe von karten- oder plattenförmigen Datenspeichern und die verschiedensten Verriegelungs- und Abdeckmittel gegen ein unbefugtes oder z. B. innerhalb eines bestimmten Zeitraums unzulässiges Entnehmen oder lediglich gegen eine unbeabsichtigte Lageveränderung durch Anstoßen an einem aus einem Schlitz heraüsragenden, kartenförmigen Datenspeicher vorgeschlagen worden. Demzufolge stellen bekannte Einrichtungen zur Aufnahme von karten- oder plattenförmigen Datenspeichern relativ aufwendige Aufhahmeaggregate dar, die aufgrund ihrer Architektur weder universell verwendbar, noch in Großserie herstellbar sind.

Derartige Einrichtungen zur Aufnahme vorzugsweise von Datenkarten entstammen dem Kreditkartenbetrieb bei Bankschaltern und selbstkassierenden Telephonen sowie bei Park- oder Tankautomaten. Sie sind im allgemeinen, was eine entscheidende Anwendungsbegrenzung darstellt, derart ausgebildet und dem betreffenden Gerät zugeordnet, daß die Eingabe einer Datenkarte durch einen Schlitz im wesentlichen senkrecht zur Frontwand des Gerätes erfolgt und somit eine relativ große Bautiefe der Aufnahmeeinrichtung erforderlich ist (z.B. EP-A- 0 313 882).

Ein wichtiges Anwendungsgebiet, bei dem im Gegensatz zu den bereits genannten der Datenspeicher in der Regel über einen längeren Zeitraum als Datensammler und/oder Befehlsgeber im Einsatz ist und bei dem die Bautiefe für die Einrichtung zur Aufnahme von transportablen Datenspeichern möglichst klein zu halten ist, ist die Datenerfassung und die Datenübergabe in Kraftfahrzeugen. Erschwerend kommt bei diesem Anwendungsgebiet hinzu, daß aufgrund des dokumentarischen Wertes der Aufzeichnungen in den Datenspeichern Manipulations- und Verschmutzungssicherungen unumgänglich sind und somit der Raumbedarf nicht unerheblich ist. Problematisch ist ferner, daß eine Datenspeicheraufnahme vorzugsweise den betreffenden Geräten zur Fahrtdaten- und Arbeitszeiterfassung oder Fahrpreisermittlung zugeordnet ist, also im haptischen Bereich des Fahrers sich befinden sollte, wo durch Häufung von Instrumenten und Betätigungseinrichtungen ohnehin ein erheblicher Raummangel' besteht. Somit muß eine Datenspeicheraufnahme für die Anwendung im Fahrzeug besonders kompakt ausgebildet sein und den auf dem Gebiet der Fahrzeuggerate geltenden Bedingungen der Großserienfertigung gerecht werden. Dies gilt aber auch für andere Anwendungen, beispielsweise wenn derartige Datenspeicher in ganz allgemeiner Weise für die Arbeitszeiterfassung eingesetzt werden, wo es für eine geeignete "Anwesenheitstafel" aus ästhetischen Gründen auf geringe Bautiefe ankommt, oder im Zusammenhang mit Anzeigepaneelen, beispielsweise bei der dezentralen Produktionsdatenerfassung, wo ein solcher Datenspeicher entweder zur Erfassung der Maschinendaten oder als produktbegleitender Informationsträger eingesetzt werden kann.

Die Aufgabe der vorliegenden Erfindung besteht somit darin, eine Einrichtung für die Aufnahme eines karten- oder plattenförmigen Datenspeichers zu schaffen, welche sich durch geringe Bautiefe und vielseitige Verwendbarkeit auszeichnet, bei welcher der Datenspeicher in Betriebsstellung unzugänglich ist und welche eine gute Serienfertigungsfähigkeit aufweist.

Die Lösung der Aufgabe sieht vor, daß einer in der Frontwand des Gerätes vorgesehenen Öffnung ein Deckel zugeordnet ist, daß der Deckel an der Frontwand drehbar gelagert ist, daß an der Geräteseite des Deckels Haltemittel für den Datenspeicher ausgebildet sind, derart daß der Datenspeicher in der geschlossenen Stellung des Deckels sich im wesentlichen in einer Parallellage zur Frontfläche des Gerätes befindet und daß an der Frontseite des Deckels Griffmittel zum Handhaben des Deckels beim Öffnen und Schließen angeformt sind.

Eine Lösungsvariante ist dadurch gekennzeichnet, daß der Deckel als Wippe ausgebildet ist und daß bezogen auf die Lagerachse der Wippe an der einen Seite der Wippe die Haltemittel für den Datenspeicher angeformt sind, während die andere Seite der Wippe wenigstens teilweise als Griffelement ausgebildet ist.

Ein bevorzugtes Anwendungsbeispiel der Erfindung ist ein Datenspeichergerät, welches sich dadurch auszeichnet, daß ein aus einem Oberteil und einem Unterteil bestehendes zweiteiliges Gehäuse vorgesehen ist, daß aus dem Deckel und einer Leiterplatte eine Baugruppe gebildet ist und daß nach der Montage des Datenspeichergerätes der Deckel mit dem Oberteil über rastend miteinander verbindbare Lagerelemente zusammengefugt und die Leiterplatte durch Verbinden der beiden Gehäuseteile mittelbar befestigt ist. Weitere vorteilhafte Ausbildungen der Erfindung beschreiben die vorstehend nicht erwähnten Unteransprüche.

Der entscheidende Vorteil, den die erfindungsgemäße Einrichtung bietet, ist darin zu sehen, daß sie eine Anordnung eines karten- oder plattenförmigen Datenspeichers parallel zur Frontwand eines Gerätes ermöglicht, womit die für die Anbringung eines derartigen Datenspeicheraufnahmeaggregates erforderliche Bauhöhe wesentlich verringert werden kann. Die erfindungsgemäße Einrichtung ermöglicht ferner eine zugriffs- und verschmutzungssichere Anordnung von derartigen Datenspeichern sowie eine in besonderer Weise ergonomisch günstige Handhabung. Dabei ist die gefundene Einrichtung geeignet, der Frontwand eines Einbaugerätes, beispielsweise eines Fahrtschreibers oder eines Fahrpreisrechners zugeordnet oder in einem beliebig aufstell- oder anbringbaren Gerät, beispielsweise in einer relativ flachen Anzeigeeinrichtung, integriert zu werden, wobei vorzugsweise die Jeweiligen für die Gerätefunktionen erforderlichen Leiterplatten, die in der Regel frontwandparallel angeordnet sind, für die Aufnahme der Schreib-Lese-Elektronik des verwendeten transportablen Datenspeichers erweitert sein können.

Die gefundene Einrichtung ist andererseits aber auch geeignet, ein autonomes Datenspeichergerät für einen transportablen Datenspeicher zu schaffen, das sich durch eine flache Bauform auszeichnet, deren Grundfläche im wesentlichen durch die größte Fläche des Datenspeichers bestimmt ist, das beispielsweise lediglich durch Anheften befestigbar ist und das dementsprechend eine hohe Akzeptanz erwarten läßt, da es eine bedarfsweise Verwendung entweder als eigenständiges Gerät oder als Zusatzgerät zu bereits vorhandenen Geräten ermöglicht.

Vorteilhaft ist ferner, daß der Fertigungs- und Montageaufwand infolge der geringen Anzahl von auf einfache Weise montierbaren Bauteilen und der Schaffung der Deckel-Leiterplatten-Baugruppe, die bereits im Vormontagestadium eine Funktionsprüfung gestattet, auf ein Minimum reduziert ist.

Im folgenden sei das bevorzugte Anwendungsbeispiel der Erfindung, ein autonomes Datenspeichergerät, anhand der beigefügten Zeichnungen näher erläutert. Es zeigen
FIGUR 1 eine Frontansicht eines autonomen Datenspeichergerätes, welches mit der erfindungsgemäßen Einrichtung ausgestattet ist,
FIGUR 2 eine Frontansicht des Deckels des Datenspeichergerätes gemäß FIGUR 1,
FIGUR 3 eine Seitenansicht des Deckels entsprechend der Pfeilrichtung P in FIGUR 2
FIGUR 4 eine Frontansicht des Gehäuseoberteils des Datenspeichergerätes,
FIGUR 5 eine Explosionsdarstellung des Datenspeichergerätes und
FIGUR 6 eine teilweise geschnittene Seitenansicht des Datenspeichergerätes gemäß FIGUR 1.

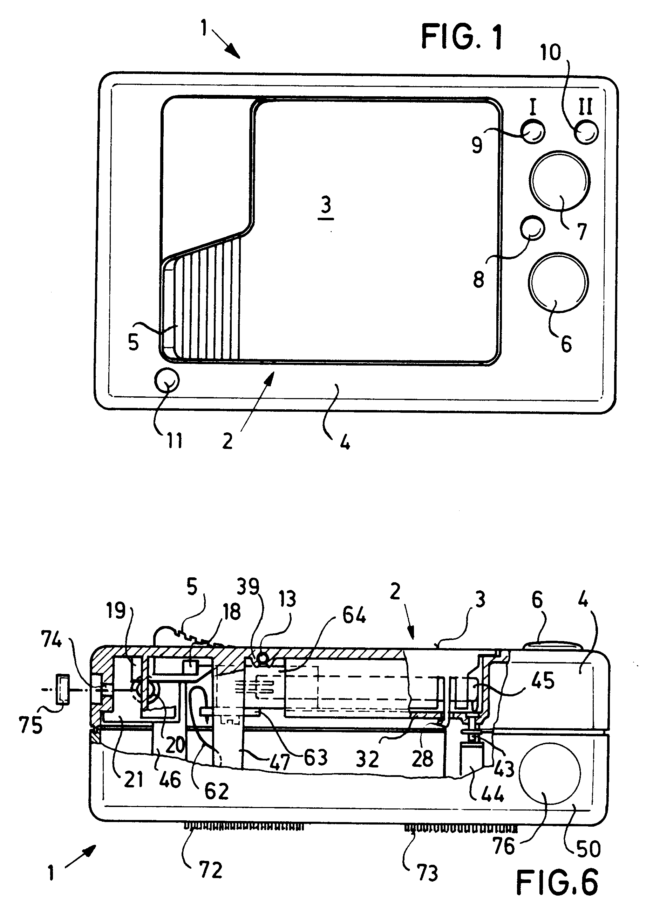

Das Datenspeichergerät, dessen Frontansicht FIGUR 1 zeigt, weist ein quaderförmiges, relativ flaches Gehäuse 1 auf, an dessen Frontseite ein aufschwenkbarer Deckel 2 angeordnet ist. Der Deckel 2 ist vorzugsweise als Wippe ausgebildet und gelagert, wobei die Frontfläche der einen Seite 3 der Wippe, die der Aufnahme des verwendeten Datenspeichers dient, im geschlossenen Zustand des Deckels 2 im wesentlichen bündig mit der Frontfläche eines Oberteils 4 des Gehäuses 1 abschließt. Auf diese Weise ist der Datenspeicher im Betriebszustand absolut unzugänglich im Gehäuse 1 versenkt angeordnet. Die andere Seite der Wippe ist als ein Griffelement 5 ausgeformt, das im geschlossenen Zustand des Deckels 2 an der Frontfläche des Gehäuses 1 herausragt. Ferner sind in FIGUR 1 zwei Tasten 6 und 7 dargestellt, von denen die eine - 6 - dazu dient, dem Gerät mitzuteilen, daß der Datenspeicher entnommen werden soll. Eine der Taste 6 zugeordnete Diode 8 zeigt die Freigabe des in geeigneter Weise verriegelten Deckels 2 an, wenn nach dem Betätigen der Taste 6 ein softwaregesteuerter Datenübertragungsabschluß und geeignete Quittierungen der Datenspeicherentnahme erfolgt sind. Mit der Taste 7, welcher Dioden 9 und 10 zugeordnet sind, kann eine anwendungsspezifische Umschaltung vorgenommen werden, beispielsweise im Taxibetrieb zwischen Dienst- und Privatfahrt oder im Nutzfahrzeugbetrieb zwischen Bereitschaftszeit und Pause. Die Lenkzeiten des betreffenden Fahrers werden in analoger Weise wie bei Fahrtschreibern automatisch registriert. Mit 11 ist eine weitere Diode bezeichnet, die der Betriebsanzeige dient.

Je nach Anwendung ist es denkbar, mehrere Tasten vorzusehen, beispielsweise wenn das Datenspeichergerät für die Betriebsdatenerfassung bzw. Produktionsdatenerfassung eingesetzt werden soll, oder es kann bis auf die Auslösetaste 6 für die Freigabe des Datenspeichers auf zusätzliche Tasten verzichtet werden. Es ist auch denkbar, daß die Funktion der Taste 6 unmittelbar in den Deckel 2 gelegt wird, d. h. daß dem Deckel 2 eine Schaltfunktion zugeordnet wird, die durch Drücken auf die eine Seite 3 des Deckels 2 auslösbar ist und beispielsweise durch einen dem Deckel 2 zugeordneten Folienschalter oder einen berilhrungssensiblen Schalter zusammen mit einer geeigneten Hinweissymbolik verwirklicht sein kann. Dadurch wird der Flächenbedarf auf die eigentliche Einrichtung zur Aufnahme des Datenspeichers reduziert und somit günstige Voraussetzungen für die Anordnung mehrerer derartiger Einrichtungen neben- oder übereinander geschaffen.

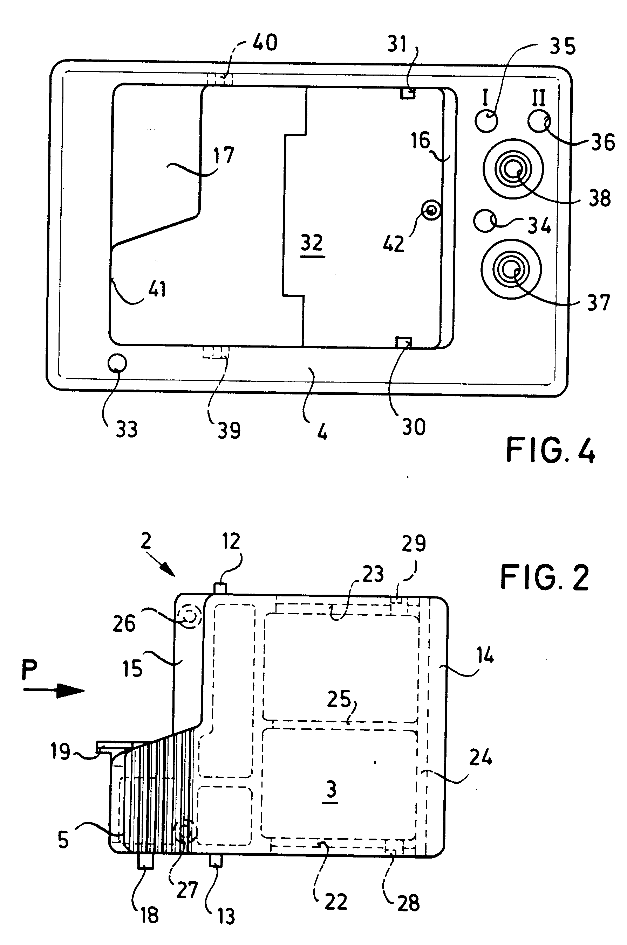

Die FIGUR 2 zeigt eine Frontansicht des Deckels 2, an welchem an gegenüberliegenden Stirnseiten Lagerzapfen 12 und 13 angeformt sind, und zwar derart, daß der Deckel 2 bezogen auf die Lagerachse eine Wippe darstellt. Außerdem zeigt die FIGUR 2, daß an dem Deckel 2 Leisten 14 und 15 ausgebildet sind, die mit entsprechenden, am Oberteil 4 des Gehäuses 1 ausgebildeten Wandpartien 16 und 17 Jeweils eine als Anschlag beim Schließen des Deckels 2 wirkende Falzverbindung bilden. Mit 18 ist ein Anschlag bezeichnet, der beim Verschwenken des Deckels 2 in die geöffnete Stellung wirksam wird. 19 stellt einen Riegel dar, welcher, was aus FIGUR 6 ersichtlich ist, mit einem gefedert gelagerten Anker 20 eines Elektromagneten 21 ein Gesperre bildet, welches im stromlosen Zustand des Elektromagneten 21 eine Verriegelung des Deckels 2 bewirkt.

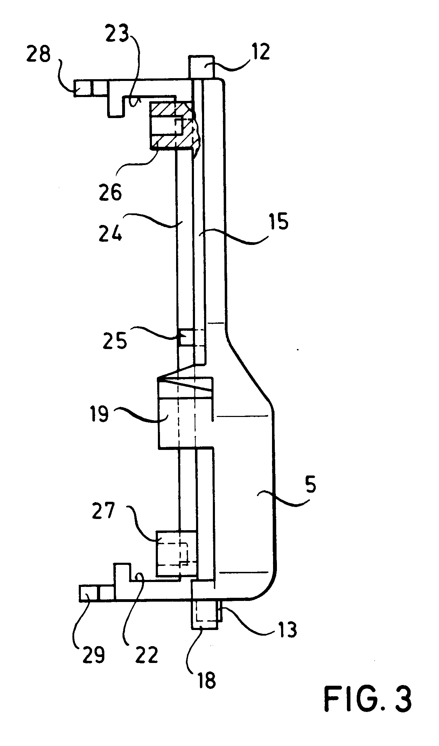

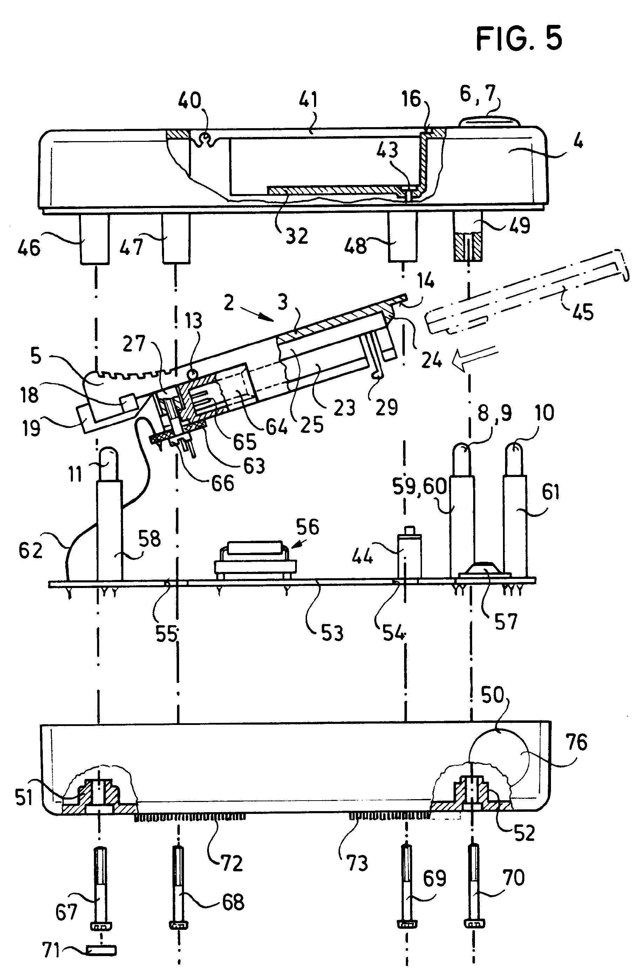

Wie aus der Seitenansicht FIGUR 3 besser ersichtlich ist, sind an dem Deckel 2 ferner U-förmige, dem Datenspeicher zugeordnete Führungsprofile 22 und 23 und Auflagerippen 24 und 25 ausgebildet. Außerdem zeigt die FIGUR 3 Gewindeansätze 26 und 27 sowie Riegel 28 und 29, welche, wie aus FIGUR 4 hervorgeht, beim Schließen des Deckels 2 durch Öffnungen 30 und 31 in einem am Oberteil 4 angeformten Zwischenboden 32 hindurchgreifen und den Deckel in der geschlossenen Stellung festhalten. Im Oberteil 4 des Gehäuses 1 sind außerdem Öffnungen 33, 34, 35 und 36 sowie diesen zugeordnete, nach innen weisende Aufnahmerohre für die Halterung der Photodioden 8, 9, 10 und 11 sowie Lagerungen 37 und 38 zur Führung der Tasten 6 und 7 ausgeformt. Mit 39 und 40 sind den Lagerzapfen 12 und 13 zugeordnete, an der Innenseite der Frontwand des Oberteils 4 ausgebildete Lagerungen bezeichnet, mit denen die Lagerzapfen 12 und 13 des Deckels 2 rastend verbindbar sind, wenn der Deckel 2 an der Frontwand montiert wird, d. h. von der Innenseite des Oberteils 4 ausgehend in die Öffnung 41 in der Frontwand eingesteckt wird.

Eine im Zwischenboden 32 befindliche, mit einer Senkung versehene Bohrung 42 dient der Lagerung eines Taststiftes 43 (FIGUR 6), welcher einen Mikroschalter 44, der die Schreib-Lese-Spannungsversorgung für die Datenbewegung schaltet, dann betätigt, wenn sowohl der Deckel 2 geschlossen, als auch ein Datenspeicher 45 eingesetzt ist.

Die Explosionsdarstellung FIGUR 5 zeigt, daß an dem Oberteil 4 des Gehäuses 1 Abstandsbolzen 46, 47, 48 und 49 angeformt sind. Ein Unterteil 50 des Gehäuses 1 trägt den Abstandsbolzen 46, 47, 48 und 49 zugeordnete Ansatzpföstchen, von denen zwei in FIGUR 5 sichtbar und mit 51 und 52 bezeichnet sind. Die Ansatzpföstchen dienen als Auflage für eine Leiterplatte 53, welche den Ansatzpföstchen entsprechende, randliche Aussparungen trägt, von denen zwei in FIGUR 5 dargestellt und mit 54 und 55 bezeichnet sind. Die Leiterplatte 53 trägt die elektronischen Bauelemente für den Datentransfer zwischen dem Datenspeicher 45 und außerhalb des Datenspeichergerätes befindlichen Gebern und/oder einem Rechner. Sie trägt elektrische Bauelemente für die Spannungsversorgung, wenigstens eine Adaptionsschnittstelle sowie einen Programmspeicher 56, welcher stellvertretend für die Vielzahl der elektronischen Bauelemente in FIGUR 5 eingezeichnet ist. Mit 57 ist einer von zwei den Tasten 6 und 7 zugeordneten Schaltern bezeichnet. 58, 59, 60 und 61 stellen den Photodiodenleitungen zugeordnete Isolationshülsen dar.

Die Leiterplatte 53 steht, wie aus FIGUR 5 hervorgeht, über ein flexibles Leitungsband 62 in elektrischer Verbindung mit einer weiteren Leiterplatte 63, welche einem Steckersockel 64 zugeordnet und mit diesem über Steckerstifte 65 mechanisch und elektrisch verbunden ist. Diese Baugruppe ist mittels Schrauben, von denen eine - 66 - dargestellt ist, über die Gewindeansätze 26 und 27 an dem Deckel 2 befestigt, und zwar derart, daß der Steckersockel 64 in der Flucht der Führungsprofile 22 und 23 angeordnet ist. Die Leiterplatte 53 und der Deckel 2 stellen somit eine vor dem Zusammenbau des Datenspeichergerätes prüffähige Baugruppe dar.

Beim Zusammenbau des Datenspeichergerätes wird die Leiterplatte 53 in das Unterteil 50 des Gehäuses 1 eingesetzt. Als nächster Montageschritt wird der Deckel 2 durch die Öffnung 41 im Oberteil 4 gesteckt und in die Lagerungen 39 und 40 eingerastet. Danach werden Unterteil 50 und Oberteil 4 des Gehäuses 1 zusammengefügt und mittels in die Abstandsbolzen 46, 47, 48, und 49 eingreifender Durchgangsschrauben 67, 68, 69 und 70 miteinander verschraubt, wobei die Leiterplatte 53 zwischen den beiden Gehäuseteilen 4 und 50 festgehalten wird. Mit 71 ist eine der Schraube 67 zugeordnete Plombe dargestellt; mit 72 und 73 sind Hakenbänder bezeichnet, die eine Befestigung des Datenspeichergerätes mittels Klettverschluß ermöglichen.

Aus der FIGUR 6, die das komplettierte Datenspeichergerät mit eingelegtem Datenspeicher 45 zeigt, ist ersichtlich, daß der gefederte Anker 20 durch eine Öffnung 74 im Oberteil 4, welcher eine Plombe 75 zugeordnet ist, zugänglich ist und von Hand betätigt werden und damit beispielsweise bei Stromausfall der Deckel 2 entriegelt werden kann. Erwähnt sei ferner, daß das flexible Leitungsband 62, das im wesentlichen der Breite des Deckels 2 entspricht, federungsfähig ausgebildet und derart vorgeformt sein kann, daß der Deckel 2 nach dem Entriegeln durch das Leitungsband 62 in die geöffnete Stellung verschwenkt, wenigstens Jedoch in dieser Stellung gehalten wird.

Der Vollständigkeit halber sei noch ergänzt, daß am Unterteil 50 seitlich und an der Rückwand Vorkehrungen jeweils in Form eines ausbrechbaren Angußfilms 76 für die Durchführung eines nicht dargestellten Kabels getroffen sind, das für eine Anwendung des Datenspeichergerätes beispielsweise im Kraftfahrzeug eine Zündleitung, eine Masseleitung, eine Pluspotential führende Leitung und zwei Datenleitungen umfaßt.

## Patentansprüche

1. Einrichtung (1) zur Aufnahme eines transportablen, karten- oder plattenförmigen Datenspeichers (45) an der Frontwand eines Gerätes, mit welcher der Datenspeicher in seine Betriebsstellung bringbar ist, in welcher er unzugänglich ist,
dadurch gekennzeichnet,
daß einer in der Frontwand des Gerätes (1) vorgesehenen Öffnung (41) ein Deckel (2) zugeordnet ist,
daß der Deckel (2) an der Frontwand drehbar gelagert ist, daß an der Geräteseite des Deckels (2) Haltemittel (22, 23, 64) für den Datenspeicher ausgebildet sind, derart daß der Datenspeicher (45) in der geschlossenen Stellung des Deckels (2) sich im wesentlichen in einer Parallellage zur Frontfläche des Gerätes befindet und
daß an der Frontseite des Deckels (2) Griffmittel (5) zum Handhaben des Deckels (2) beim Öffnen und Schließen angeformt sind.

2. Einrichtung nach Anspruch 1,
dadurch gekennzeichnet,
daß an gegenüberliegenden Stirnseiten des Deckels (2) Lagerzapfen (12, 13) angeformt sind und
daß an der Innenseite der Frontwand den Lagerzapfen (12, 13) zugeordnete Lager (39, 40) ausgebildet sind.

3. Einrichtung nach Anspruch 1,
dadurch gekennzeichnet,
daß an dem Deckel (2) der Zuhaltung in Betriebsstellung des Datenspeichers (45) dienende, federnde Rastmittel (28, 29) ausgebildet sind.

4. Einrichtung nach Anspruch 1,
dadurch gekennzeichnet,
daß an dem Deckel (2) dem Datenspeicher (45) zugeordnete Kontaktierungsmittel (64) befestigt sind,
daß eine der Frontwand fest zugeordnete Leiterplatte (53) vorgesehen ist und
daß die Kontaktierungsmittel (64) und die Leiterplatte (53) mittels eines als Feder wirkenden, flexiblen Leitungsbandes (62) verbunden sind.

5. Einrichtung nach Anspruch 1,
dadurch gekennzeichnet,
daß dem Deckel (2) eine elektromechanische Verriegelung (19, 20, 21) zugeordnet ist, welche durch eine frontseitig zugängliche Taste (6) steuerbar ist.

6. Einrichtung nach Anspruch 5,
dadurch gekennzeichnet,
daß der Taste (6) eine Freigabeanzeige (8) zugeordnet ist.

7. Einrichtung nach Anspruch 1,
dadurch gekennzeichnet,
daß der Deckel (2) als Wippe ausgebildet ist und
daß bezogen auf die Lagerachse der Wippe an der einen Seite (3) der Wippe die Haltemittel für den Datenspeicher (45) angeformt sind, während die andere Seite der Wippe wenigstens teilweise als Griffelement (5) ausgebildet ist.

8. Einrichtung nach Anspruch 7,
dadurch gekennzeichnet,
daß die Wippe derart geformt ist, daß in der Schließstellung die eine für die Aufnahme des Datenspeichers (45)
vorgesehene Seite (3) der Wippe im wesentlichen bündig mit der Frontfläche der Frontwand abschließt und die andere als Griffelement (5′) ausgebildete Seite der Wippe wenigstens teilweise aus der Ebene der Frontfläche der Frontwand herausragt.

9. Datenspeichergerät mit einer Einrichtung nach Anspruch 1,
dadurch gekennzeichnet,
daß ein aus einem Oberteil (4) und einem Unterteil (50) bestehendes zweiteiliges Gehäuse (1) vorgesehen ist,
daß aus dem Deckel (2) und der Leiterplatte (53) eine Baugruppe gebildet ist und
daß nach der Montage des Datenspeichergerätes der Deckel (2) mit dem Oberteil (4) über rastend miteinander verbindbare Lagerelemente (12, 13, 39, 40) zusammengefügt und die Leiterplatte (53) durch Verbinden der beiden Gehäuseteile (4, 50) mittelbar befestigt ist.

10. Datenspeichergerät nach Anspruch 9,
dadurch gekennzeichnet,
daß an der Unterseite des Unterteils (so) des Gehäuses (1) Mittel (72, 73) für eine haftende Befestigung des Datenspeichergerätes angeordnet sind.

11. Datenspeichergerät nach Anspruch 9,
dadurch gekennzeichnet,
daß auf der Leiterplatte (53) ein Schalter (44) befestigt ist und
daß der Schalter (44) bei geschlossenem Deckel (2) und eingesetztem Datenspeicher (45) mittels eines im Oberteil (4) des Gehäuses (1) verschiebbar gelagerten Taststiftes (43) betätigt ist.

12. Datenspeichergerät nach Anspruch 9,
dadurch gekennzeichnet,
daß wenigstens zwei Einrichtungen nach Anspruch 1 vorzugsweise übereinander angeordnet sind.

## Claims

1. Device (1) for receiving a transportable, card or disk-shaped data store (45) at the front wall of a device, by means of which the data store can be brought into its operating position in which it is inaccessible, characterized in that a cover (2) is associated with an opening (41) provided in the front wall of the device (1), in that the cover (2) is rotatably mounted on the front wall, in that holding means (22, 23, 64) for the data store are constructed on the device side of the cover (2) such that in the closed position of the cover (2) the data store (45) is located substantially in a parallel position with respect to the front face of the device, and in that gripping means (5) for handling the cover (2) on opening and closing are integrally formed on the front side of the cover (2).

2. Device according to Claim 1, characterized in that bearing journals (12, 13) are integrally formed on opposing end sides of the cover (2), and in that bearings (39, 40) associated with the bearing journals (12, 13) are constructed on the inside of the front wall.

3. Device according to Claim 1, characterized in that resilient latching means (28, 29) serving for holding closed in the operating position of the data store (45) are constructed on the cover (2).

4. Device according to Claim 1, characterized in that contact means (64) associated with the data store (45) are secured to the cover (2), in that a printed circuit board (53) permanently associated with the front wall is provided, and in that the contact means (64) and the printed circuit board (53) are connected by means of a flexible ribbon connector (62) acting as a spring.

5. Device according to Claim 1, characterized in that there is associated with the cover (2) an electromechanical locking (19, 20, 21) which can be controlled by a button (6) which is accessible from the front side.

6. Device according to Claim 5, characterized in that a release display (8) is associated with the button (6).

7. Device according to Claim 1, characterized in that the cover (2) is constructed as a rocker, and in that in relation to the bearing axis of the rocker the holding means for the data store (45) are integrally formed on the one side (3) of the rocker, while the other side of the rocker is constructed at least partly as a gripping element (5).

8. Device according to Claim 7, characterized in that the rocker is shaped such that in the closed position the one side (3) of the rocker provided for receiving the data store (45) terminates substantially flush with the front face of the front wall and the other side of the rocker constructed as a gripping element (5) projects at least partly from the plane of the front face of the front wall.

9. Data storage device having a device according to Claim 1, characterized in that a two-part housing (1) comprising an upper part (4) and a lower part (50) is provided, in that a subassembly is formed from the cover (2) and the printed circuit board (53), and in that after the assembly of the data storage device the cover (2) is joined to the upper part (4) by way of bearing elements (12, 13, 39, 40) which can be connected to one another in latching manner and the printed circuit board (53) is secured indirectly by connecting the two housing parts (4, 50).

10. Data storage device according to Claim 9, characterized in that means (72, 73) for a stick-on securing of the data storage device are arranged on the underside of the lower part (50) of the housing (1).

11. Data storage device according to Claim 9, characterized in that a switch (44) is secured to the printed circuit board (53) and in that the switch (44), when the cover (2) is closed and the data store (45) is inserted, is actuated by means of a sensor pin (43) displaceably mounted in the upper part (4) of the housing (1).

12. Data storage device according to Claim 9, characterized in that at least two devices according to Claim 1 are preferably arranged one on top of the other.

## Revendications

1. Dispositif (1) pour le logement d'une mémoire de données (45) transportable, en forme de carte ou de plaque, sur la paroi frontale d'un appareil, à l'aide duquel ladite mémoire de données peut être amenée dans sa position de service dans laquelle elle est inaccessible,
caractérisé par le fait
qu'à une ouverture (41) prévue dans la paroi frontale de l'appareil (1) est associée un couvercle (2),
que ledit couvercle (2) est monté à rotation sur ladite paroi frontale,
que sur la face du côté appareil dudit couvercle (2) sont formés des moyens de fixation (22, 23, 64) pour la mémoire de données, de telle sorte que, dans la position fermée du couvercle (2), ladite mémoire de données (45) se trouve, pour l'essentiel, dans une position parallèle à la face frontale de l'appareil et
que sur la face frontale du couvercle (2) sont formés des moyens de maniement (5) pour la manipulation dudit couvercle (2) lors de l'ouverture et la fermeture.

2. Dispositif selon la revendication 1,
caractérisé par le fait
que sur des faces frontales opposées du couvercle (2) sont moulés des tourillons (12, 13) et
que sur la face intérieure de la paroi frontale sont formés des paliers (39, 40) associés auxdits tourillons (12, 13).

3. Dispositif selon la revendication 1,
caractérisé par le fait
que sur le couvercle (2) sont réalisés des moyens d'encliquetage élastiques (28, 29) servant à maintenir ce dernier fermé dans la position de service de la mémoire de données (45).

4. Dispositif selon la revendication 1,
caractérisé par le fait
que sur le couvercle (2) sont fixés des moyens d'établissement de contact (64) associés à la mémoire de données (45),
qu'il est prévu une platine à circuits imprimés (53) associée de manière fixe à la paroi frontale et
que les moyens d'établissement de contact (64) et la platine à circuits imprimés (53) sont reliés au moyen d'un câble en nappe souple (62) assumant la fonction d'un ressort.

5. Dispositif selon la revendication 1,
caractérisé par le fait
qu'au couvercle (2) est associé un dispositif de verrouillage électromécanique (19, 20, 21) qui peut être commandé par une touche (6) accessible du côté frontal.

6. Dispositif selon la revendication 5,
caractérisé par le fait
qu'à la touche (6) est associé un affichage de déblocage (8).

7. Dispositif selon la revendication 1,
caractérisé par le fait
que le couvercle (2) est réalisé en forme de bascule et que, par rapport à l'axe de palier de la bascule, les moyens de fixation pour la mémoire de données (45) sont moulés d'un côté (3) de la bascule alors que l'autre côté de la bascule est formé, au moins partiellement, comme élément de maniement (5).

8. Dispositif selon la revendication 7,
caractérisé par le fait
que la bascule a été réalisée de telle sorte que, dans la position de fermeture, l'un des côtés (3) de la bascule prévu pour le logement de la mémoire de données (45) se termine, pour l'essentiel, à fleur de la face frontale de la paroi frontale et que l'autre côté de la bascule formé comme élément de maniement (5) émerge, au moins partiellement, du plan de la face frontale de la paroi frontale.

9. Appareil de mise en mémoire de données avec un dispositif selon la revendication 1,
caractérisé par le fait
qu'il est prévu un boîtier bipartite (1) constitué d'une partie supérieure (4) et d'une partie inférieure (50), qu'avec le couvercle (2) et la platine à circuits imprimés (53) a été formé un sous-ensemble et
qu'après le montage de l'appareil de mise en mémoire de données, le couvercle (2) est assemblé avec la partie supérieure (4) par l'intermédiaire d'éléments de palier (12, 13, 39, 40) pouvant être reliés ensemble par encliquetage et que la platine à circuits imprimés (53) est indirectement fixée par l'assemblage des deux parties de boîtier (4, 50).

10. Appareil de mise en mémoire de données selon la revendication 9,
caractérisé par le fait
que sur la face inférieure de la partie inférieure (50) du boîtier (1) sont diposés des moyens (72, 73) pour une fixation par auto-agrippage de l'appareil de mise en mémoire de données.

11. Appareil de mise en mémoire de données selon la revendication 9,
caractérisé par le fait
que sur la platine à circuits imprimés (53) est fixé un interrupteur (44) et
que ledit interrupteur (44), dans l'état fermé du couvercle (2) et après la mise en place de la mémoire de données (45), est actionné au moyen d'un palpeur (43) monté mobile dans la partie supérieure (4) du boîtier (1).

12. Appareil de mise en mémoire de données selon la revendication 9,
caractérisé par le fait
qu'au moins deux dispositifs selon la revendication 1 sont disposés, de préférence, l'un au-dessus de l'autre.
